# FASCICULE DE BREVET EUROPEEN

(11) **EP 1 517 862 B1**
(45) Date de publication et mention de la délivrance du brevet: **16.02.2011**
(21) Numéro de dépôt: 03761613.3
(22) Date de dépôt: 11.06.2003
(51) Int. Cl.: C02F 3/12, C02F 3/28, C02F 3/30

(54) **PROCEDE DE TRAITEMENT EN TROIS ETAPES BIOLOGIQUES D' UN EFFLUENT**
VERFAHREN ZUR BEHANDLUNG VON ABWASSER IN DREI BIOLOGISCHEN SCHRITTEN
METHOD FOR TREATING AN EFFLUENT IN THREE BIOLOGICAL STEPS

(30) Priorité: 28.06.2002 FR 0208108
(43) Date de publication de la demande: 30.03.2005
(73) Titulaire: Syndicat Interdepartemental pour l'Assainissement de l'Agglomeration Parisienne, 75012 Paris (FR)
(72) Inventeur: KRIER, Jean, F-91200 Athis-Mons (FR)
(74) Mandataire: Pöpping, Barbara
(86) Numéro de dépôt international: PCT/FR2003/001739
(87) Numéro de publication internationale: WO 2004/002903

(56) Documents cités:
- DE-A- 19 932 903
- US-A- 4 500 429
- US-A- 5 643 453

## Description

L'invention concerne un procédé de traitement biologique d'un effluent en vue de son épuration, en particulier dans le domaine du traitement des eaux usées principalement urbaines.

Il existe divers procédés de traitement biologiques de la pollution des eaux principalement urbaines. Ces traitements s'appuient sur la faculté dont dispose la biomasse d'éliminer la pollution biodégradable soit en l'assimilant dans le floc bactérien, soit en la transformant en molécules gazeuses (CO₂ pour la pollution carbonée ; N₂ pour la pollution azotée via la nitrification de l'azote en nitrates par la biomasse nitrifiante, puis la dénitrification des nitrates en azote atmosphérique par la biomasse dénitrifiante). Ces traitements peuvent être extensifs, et s'appuient alors sur la capacité traitante des bactéries présentes dans l'eau urbaine, avec l'aide de l'oxygène apporté par les échanges avec l'atmosphère (généralement par insufflation d'air) et de la photosynthèse (généralement par système de lagunage). Ces traitements peuvent être intensifs, et recourent alors à l'utilisation de cultures bactériennes, artificielles, qui « consomment » les matières polluantes. On distingue trois catégories de procédés biologiques artificiels. En premier, on distingue les installations à « cultures libres », dans lesquelles la culture bactérienne est maintenue en suspension dans le courant des eaux usées à traiter, dont font partie les installations à « boues activées », système d'épuration aérobie dans un bassin aéré et brassé En deuxième, on distingue les installations à « cultures fixées », où la culture bactérienne, appelée aussi « biofilm », « film biologique » ou « biomasse », repose sur un support fixe (caillou, plastique, milieu granulaire fin). En troisième, on distingue les installations à « cultures mixtes », c'est-à-dire comprenant des suspensions de bactéries fixées sur un support mobile tel que du plastique.

Ces procédés conduisent donc au rejet d'une eau traitée ; de molécules gazeuses (principalement CO₂ et N₂ en traitement aérobie, mais aussi CH₄ en traitement anaérobie), qui sont renvoyés à l'atmosphère, directement ou éventuellement après combustion ; de boues en excès, principalement constituées de la biomasse produite pendant le traitement ; et de pollution décantable non biodégradable.

La demande de brevet EP-A2-0.979.803 décrit un procédé de traitement d'un effluent par dénitrification, comprenant une zone de traitement de nitrification aérobie, qui permet aussi une certaine décomposition organique, suivie d'une zone de traitement de dénitrification anaérobie comprenant une zone de filtre. Ladite zone de traitement de dénitrification anaérobie réalise la transformation des sulfates en sulfures, puis la transformation hétérotrophe des nitrates en gaz azote et en parallèle la transformation des sulfures en sulfates. En pratique, la présence de nitrates dans la zone de traitement de dénitrification anaérobie va poser un problème dans le temps car le potentiel d'oxydoréduction ou potentiel rédox dans le réacteur est difficilement compatible avec l'activité des bactéries de sulfato-réduction. De plus la production de sulfures à partir de sulfates ne peut se faire, avec les bactéries généralement utilisées, qu'en présence de carbone. Or pratiquement tout le carbone a été consommé dans la première étape. Il est donc excessivement difficile de produire des sulfures en zone de dénitrification. C'est pour cela qu'il est proposé d'introduire des sulfures dans cette zone, ce qui est peu confortable et peu souhaité en termes de sécurité et de mauvaises odeurs.

La demande de brevet WO 00/27.763 décrit une installation de traitement des eaux comprenant un ou deux réacteur(s) anaérobie(s) à flux ascendant, avec mélangeur, suivi(s) d'un réacteur aérobie. Le(s) premier(s) réacteur(s) anaérobie(s) réalise(nt) une sulfato-réduction en milieu strictement anaérobie. L'effluent qui sort de l'installation est annoncé comme étant débarrassé de la pollution (N, P) par action biologique, et des métaux lourds et des matières toxiques non biodégradables par action physico-chimique. Cette installation comprend un dispositif de circulation de boue lié au(x) réacteur (s) anaérobie(s), ce qui alourdit le traitement. D'autre part, une telle boue est riche en sulfures, ce qui pose des problèmes d'odeur et de sécurité.

Par suite, il subsiste le besoin d'effectuer un traitement d'effluent arrivant à la fois à dépolluer en azote et en carbone, tout en produisant un effluent sans nuisance olfactive, c'est-à-dire conforme aux pratiques de la profession. Le procédé de l'invention permet avantageusement de répondre à ce besoin.

Le procédé selon l'invention est un procédé de traitement biologique d'un effluent en vue de son épuration, qui comprend le traitement de la majeure partie dudit effluent, de préférence de pratiquement tout ledit effluent, dans une première étape de traitement biologique anaérobie, à biomasse fixée sur un support mobile, donnant un premier effluent, la biomasse présente dans la première étape comprenant au moins des bactéries sulfato-réductrices, puis le traitement de la majeure partie du premier effluent, de préférence de pratiquement tout ledit premier effluent, dans une deuxième étape de traitement biologique anoxique, à biomasse fixée, donnant un deuxième effluent, la biomasse présente dans la deuxième étape comprenant au moins des bactéries sulfo-oxydantes, et enfin le traitement de la majeure partie du deuxième effluent, de préférence de pratiquement tout le deuxième effluent, dans une troisième étape de traitement biologique aérobie, à biomasse fixée, donnant un troisième effluent épuré, la biomasse présente dans la troisième étape comprenant au moins des bactéries nitrifiantes, ledit procédé comprenant en outre un recyclage d'une partie de l'effluent présent dans la troisième étape vers la deuxième étape (où il est traité).

Ainsi, dans la première étape de traitement biologique anaérobie, il est essentiellement conduit, en présence de bactéries sulfato-réductrices, une dépollution majoritaire des composés carbonés qui sont dans un premier temps transformés en acides volatiles, avec une production de CO₂ dissous, sans rejet de CO₂ à l'atmosphère. Puis lesdits acides volatiles sont dans un deuxième temps assimilés pratiquement totalement par les bactéries sulfato-réductrices en même temps que se produit la transformation de pratiquement tous les sulfates en sulfures. En effet, la transformation de la pollution carbonée ne va pas jusqu'à la méthanisation parce que c'est une étape très longue qui se fait en présence de bactéries méthanogènes. Dans la seconde étape de traitement biologique anoxique, en l'absence d'oxygène, il se produit essentiellement une dénitrification, avec transformation de pratiquement tous les nitrates qui sont recyclés, issus de la troisième étape, en gaz azote N₂ et en NO₃, avec en parallèle une transformation de pratiquement tous les sulfures par sulfo-oxydation (dénitrification autotrophe). C'est ce qui explique que l'apport de O₂ ne soit pas nécessaire, car c'est la transformation des sulfures en sulfates qui permet de réduire les nitrates en azote. De plus, dans cette deuxième étape, il se produit encore avantageusement une sensible réduction de la pollution carbonée. Enfin, dans la troisième étape de traitement biologique aérobie, il se produit une nitrification aérobie, pratiquement en l'absence de carbone, qui voit la transformation de pratiquement tout l'ammoniac en nitrates. Le recyclage d'une partie de l'effluent présent dans la troisième étape vers la deuxième étape se fait soit à partir de l'effluent présent en troisième étape que l'on prélève, soit à partir du troisième effluent qui sort de la troisième étape. Il est remis en circulation en deuxième étape, de préférence à l'entrée de la deuxième étape par mélange avec le deuxième effluent. Avantageusement, un tel recyclage permet de diminuer le taux de nitrates sortant dans le troisième effluent.

De façon avantageuse, pratiquement aucun effluent gazeux, hormis l'azote dans la deuxième étape, n'est émis dans les première et deuxième étapes du procédé selon l'invention. En particulier le CO₂ généré lors de la première étape est généralement dissous dans le premier effluent.

Avantageusement, un tel procédé permet d'effectuer un traitement d'effluent arrivant à la fois à dépolluer en azote et en carbone sans générer de nuisance olfactive particulière, essentiellement débarrassé de toute pollution par les sulfures, contrairement aux documents EP-A2 0.979.803 et WO 00/27.763.

Ainsi, le procédé selon l'invention permet de façon particulièrement avantageuse d'exploiter le cycle biologique d'oxydo-réduction du soufre, d'une part pour éliminer la pollution carbonée sans apport d'oxygène, et d'autre part pour assurer une dénitrification autotrophe sans source de carbone.

De manière particulièrement avantageuse, un tel procédé permet aussi de réduire fortement la consommation en oxygène pour réduire la pollution carbonée. En effet, la pollution carbonée est majoritairement éliminée dans les deux premières étapes de traitement biologique, en anaérobie et en anoxie.

De plus, puisque la demande en oxygène est réduite, les débits d'air rejeté à l'atmosphère sont donc diminués et comprennent moins, voire pratiquement pas, de CO₂. Par suite, c'est un avantage pour l'environnement car la toxicité de CO₂ en tant que gaz à effet de serre est connue.

Le procédé selon l'invention permet encore avantageusement de limiter le type de boues à traiter à celles extraites d'une décantation aval, car pratiquement toutes les MES (Matières En Suspension) passent à travers le système sans nécessiter d'extraction de boues supplémentaire (liée au procédé selon l'invention) comme dans la demande de brevet WO 00/27.763, et sans gêner le bon fonctionnement du procédé.

Enfin, le procédé selon l'invention permet de façon avantageuse une faible production de boues par rapport aux systèmes classiques aérobies de réduction de la pollution carbonée. En effet les systèmes bactériens anaérobies et aérobies nitrifiants sont peu énergétiques, avec des taux de croissance très faibles.

D'autre part, l'énergie apportée pour la première étape se limite essentiellement à une énergie de brassage, ce qui permet une économie d'énergie par rapport aux systèmes conventionnels aérobies. Cette combinaison intéressante d'économie d'énergie et de diminution notable de rejet à l'atmosphère de CO₂, s'inscrit particulièrement bien dans le cadre d'une politique de développement durable.

Selon un mode de réalisation de l'invention, la majeure partie de, de préférence pratiquement tout, l'effluent à traiter dans ledit procédé est tamisé et/ou décanté, de préférence tamisé, dans une étape préalable audit procédé de traitement.

Selon un mode de réalisation préféré de l'invention, la majeure partie, de préférence pratiquement tout, du troisième effluent issu dudit procédé est décanté.

La biomasse présente dans la première étape comprend au moins des bactéries sulfato réductrices. Ces bactéries sont généralement choisies dans le groupe formé par les bactéries de type Désulfovibrio et Désulfatomaculum.

La biomasse présente dans la deuxième étape réacteur comprend au moins des bactéries sulfo-oxydantes. Ces bactéries sont généralement choisies dans le groupe formé par les bactéries de type Thiotrix et Beggiatoa.

La biomasse présente dans la troisième étape comprend au moins des bactéries nitrifiantes. Ces bactéries sont généralement choisies dans le groupe formé par les bactéries de type Nitrosomonas et Nitrobacter.

Dans le cas d'un support fixe, le support de la biomasse présente dans la deuxième et/ou troisième étape du procédé selon l'invention est généralement choisi dans le groupe formé par les matériaux minéraux, comme les sables et la pouzzolanne, et les matériaux de synthèse, tels que les BIOSTYRENE^{®} commercialisé par la Société OTV ou le BIOLITE^{®} commercialisé par la société DEGREMONT.

Dans le cas d'un support mobile, le support de la biomasse présente dans la première, deuxième et/ou troisième étape du procédé selon l'invention est généralement choisi dans le groupe formé par les matériaux plastiques connus de l'homme du métier. Comme exemples commerciaux de tels matériaux plastiques, on peut citer les matériaux KMT 1, KMT 2 et AMT de la société KALDNES, les matériaux BIOLITE^{®}, BIOCUBE^{®} et FLOCOR RMP de la société DEGREMONT, ou bien le matériau NATRIX MAJOR de la société ANOX, ainsi que le matériau BIOFLOW 9 de la société CERA COM.

La deuxième étape de traitement anoxique est généralement un traitement à biomasse fixée sur un support fixe et/ou mobile, de préférence fixe ou mobile.

Selon un mode de réalisation de l'invention, la deuxième étape de traitement anoxique est un traitement à biomasse fixée sur un support fixe. Par exemple la biomasse est un biofiltre comprenant au moins des bactéries sulfo-oxydantes. Dans un tel cas, l'effluent à traiter dans ledit procédé est généralement décanté dans une étape préalable audit procédé de traitement.

Selon un autre mode, préféré, de réalisation de l'invention, la deuxième étape de traitement anoxique est un traitement à biomasse fixée sur un support mobile.

La troisième étape de traitement aérobie est généralement un traitement à biomasse fixée sur un support fixe et/ou mobile, de préférence fixe ou mobile.

Selon un mode de réalisation de l'invention, la troisième étape de traitement aérobie est un traitement à biomasse fixée sur un support fixe. Par exemple la biomasse est un biofiltre comprenant au moins des bactéries nitrifiantes. Dans un tel cas, l'effluent à traiter dans ledit procédé est généralement décanté dans une étape préalable audit procédé de traitement.

Selon un autre mode, préféré, de réalisation de l'invention, la troisième étape de traitement aérobie est un traitement à biomasse fixée sur un support mobile.

Selon un mode de réalisation particulièrement préféré de l'invention, la deuxième étape de traitement anoxique est un traitement à biomasse fixée sur un support mobile et la troisième étape de traitement aérobie est un traitement à biomasse fixée sur un support mobile. Dans un tel cas, avantageusement, l'énergie apportée est essentiellement une énergie de brassage dans les différentes étapes.

Selon un mode de réalisation préféré de l'invention, la partie de l'effluent présent dans la troisième étape qui est recyclée vers la deuxième étape est recyclée à un taux, par rapport au deuxième effluent, de 50 à 150%, de préférence 80 à 120%, de façon encore plus préférée à environ 100%, en volume.

L'invention concerne enfin un procédé de traitement biologique d'un effluent utilisant un dispositif comprenant un premier réacteur de traitement, à biomasse fixée sur un support mobile, puis un deuxième réacteur de traitement anoxique, à biomasse fixée, et enfin un troisième réacteur de traitement aérobie, à biomasse fixée, ainsi que les moyens de transport d'effluent vers le premier réacteur, du premier au deuxième réacteur, du deuxième au troisième réacteur, et les moyens de sortie d'effluent du troisième réacteur, ledit dispositif comprenant en outre au moins un moyen de recyclage du troisième réacteur vers le deuxième réacteur.

Ledit moyen de recyclage est généralement tel qu'il peut recycler une partie de l'effluent qui peut être présent dans le troisième réacteur et/ou une partie de l'effluent qui peut sortir du troisième réacteur. Le premier réacteur comprend généralement de 20 à 80 %, de préférence de 40 à 60%, par exemple environ 40%, en volume, de support mobile. Ce support est généralement choisi dans le groupe formé par les matériaux plastiques connus de l'homme du métier. Comme exemples commerciaux de tels matériaux plastiques, on peut citer les matériaux KMT 1, KMT 2 et AMT de la société KALDNES, les matériaux BIOLITE^{®}, BIOCUBE^{®} et FLOCOR RMP de la société DEGREMONT, ou bien le matériau NATRIX MAJOR de la société ANOX, ainsi que la matériau BIOFLOW 9 de la société CERA COM.

De préférence, un tel dispositif comprend en outre au moins un réacteur de prétraitement dans lequel la majeure partie de, de préférence tout, ledit effluent à traiter, est tamisé et/ou décanté, de préférence tamisé, avant son entrée dans ledit premier réacteur.

De préférence, un tel dispositif comprend en outre au moins un réacteur de post traitement. Dans celui-ci, la majeure partie de, de préférence pratiquement tout, l'effluent qui peut sortir du troisième réacteur, est décanté.

Selon l'invention, le premier réacteur comprend une biomasse qui comprend des bactéries sulfato réductrices. Ces bactéries sont généralement choisies dans le groupe formé par les bactéries de type Désulfovibrio et Désulfatomaculum.

Selon un mode de réalisation préféré de l'invention, le deuxième réacteur comprend une biomasse fixée sur un support mobile.

Selon un autre mode de réalisation de l'invention, le deuxième réacteur comprend une biomasse fixée sur un support fixe. Dans un tel cas, le dispositif comprend en outre généralement au moins un réacteur de prétraitement dans lequel la majeure partie de, de préférence pratiquement tout, l'effluent à traiter dans le deuxième réacteur, est décanté avant son entrée dans ledit deuxième réacteur.

Le deuxième réacteur comprend généralement de 20 à 80 %, de préférence de 40 à 60%, par exemple d'environ 40%, en volume, de support, fixe ou mobile.

Dans le cas d'un support fixe, le support est généralement choisi dans le groupe formé par les matériaux minéraux, comme les sables et la pouzzolanne, et les matériaux de synthèse, tels que le BIOSTYRENE^{®} commercialisé par la Société OTV ou le BIOLITE^{®} commercialisé par la société DEGREMONT.

Dans le cas d'un support mobile, le support est généralement choisi dans le groupe formé par les matériaux plastiques connus de l'homme du métier. Comme exemples commerciaux de tels matériaux plastiques, on peut citer les matériaux KMT 1, KMT 2 et AMT de la société KALDNES, les matériaux BIOLITE^{®}, BIOCUBE^{®} et FLOCOR RMP de la société DEGREMONT, ou bien le matériau NATRIX MAJOR de la société ANOX, ainsi que le matériau BIOFLOW 9 de la société CERA COM.

Selon l'invention, le deuxième réacteur comprend une biomasse qui comprend des bactéries sulfo-oxydantes. Ces bactéries sont généralement choisies dans le groupe formé par les bactéries de type Thiotrix et Beggiatoa.

Selon un mode de réalisation de l'invention, le troisième réacteur comprend une biomasse fixée sur un support mobile.

Selon un autre mode de réalisation de l'invention, le troisième réacteur comprend une biomasse fixée sur un support fixe. Dans un tel cas, le dispositif comprend en outre généralement au moins un réacteur de prétraitement dans lequel la majeure partie de, de préférence pratiquement tout, l'effluent à traiter dans le troisième réacteur est décanté avant son entrée dans ledit troisième réacteur.

Le troisième réacteur comprend généralement de 20 à 80 %, de préférence de 40 à 60%, par exemple d'environ 40%, en volume, de support, fixe ou mobile.

Dans le cas d'un support fixe, le support est généralement choisi dans le groupe formé par les matériaux minéraux, comme les sables et la pouzzolanne, et les matériaux de synthèse, tels que le BIOSTYRENE^{®} commercialisé par la Société OTV ou le BIOLITE^{®} commercialisé par la société DEGREMONT.

Dans le cas d'un support mobile, le support est généralement choisi dans le groupe formé par les matériaux plastiques connus de l'homme du métier. Comme exemples commerciaux de tels matériaux plastiques, on peut citer les matériaux KMT 1, KMT 2 et AMT de la société KALDNES, les matériaux BIOLITE^{®}, BIOCUBE^{®} et FLOCOR RMP de la société DEGREMONT, ou bien le matériau NATRIX MAJOR de la société ANOX, ainsi que le matériau BIOFLOW 9 de la société CERA COM.

Selon l'invention, le troisième réacteur comprend une biomasse qui comprend des bactéries nitrifiantes. Ces bactéries sont généralement choisies dans le groupe formé par les bactéries de type Nitrosomonas et Nitrobacter.

Selon un mode de réalisation préféré de l'invention, le premier réacteur comprend au moins un moyen de mélange. Cela permet avantageusement de favoriser les réactions pouvant avoir lieu dans ledit premier réacteur.

Selon un mode de réalisation préféré de l'invention, dans le cas où le support est mobile, le deuxième réacteur comprend au moins un moyen de mélange. Cela permet avantageusement de favoriser les réactions pouvant avoir lieu dans ledit deuxième réacteur.

Selon un mode de réalisation préféré de l'invention, dans le cas où le support est mobile, le troisième réacteur comprend au moins un moyen de mélange. Cela permet avantageusement de favoriser les réactions pouvant avoir lieu dans ledit troisième réacteur.

Le premier réacteur comprend généralement au moins un moyen d'aération. Cela permet avantageusement de favoriser les réactions pouvant avoir lieu dans ledit premier réacteur.

Selon un mode de réalisation préféré de l'invention, la partie de l'effluent qui est recyclée vers le deuxième réacteur par au moins un moyen de recyclage peut être une partie de l'effluent qui peut sortir du troisième réacteur.

Selon un mode de réalisation préféré de l'invention, le moyen de recyclage est tel qu'il peut recycler une partie de l'effluent qui peut être présent dans le troisième réacteur.

Dans tous les cas, le dispositif comprend au moins un moyen de mélange apte à mélanger la partie de l'effluent qui peut sortir du troisième réacteur et/ou qui peut être présent dans le troisième réacteur, et qui est recyclée vers le deuxième réacteur par au moins un moyen de recyclage, avec l'effluent apte à être transporté par un moyen de transport du premier réacteur au deuxième réacteur. Ainsi le dispositif selon l'invention comprend alors en combinaison entre le premier et le deuxième réacteur au moins un moyen de transport, au moins un moyen de mélange d'effluent et aussi au moins un moyen d'introduction d'effluent dans le deuxième réacteur.

L'invention sera mieux comprise et d'autres caractéristiques et avantages apparaîtront à la lecture de la description qui va suivre, donnée à titre non limitatif, par référence à la figure.

La figure représente schématiquement un dispositif 12 de traitement d'effluent selon l'invention.

Trois réacteurs 3, 4 et 5, alimentés par un effluent apporté par un conduit 1, dans lequel de la matière en suspension (MES) est présente, effectuent un traitement d'épuration en trois étapes et permettent la sortie par un conduit 2 d'un effluent épuré, dans lequel sont toujours présentes des MES. Les flèches symbolisent le sens de trajet des effluents au sein du dispositif 12. L'effluent 1 entre dans le réacteur 3 de traitement anaérobie. Il en sort un effluent qui est dirigé par un conduit 9 vers un réacteur 4 de traitement anoxique. L'effluent qui sort du réacteur 4 par un conduit 10 alimente un réacteur 5 de traitement aérobie. Du réacteur 5, par un moyen de recyclage non représenté, sort un effluent de recyclage qui est renvoyé au réacteur 4 par un conduit 11. Le réacteur 3 comprend un moyen 6 de mélange. Le réacteur 4 comprend un moyen 7 de mélange. Le réacteur 5 comprend un moyen 8 de mélange et d'aération, ladite aération étant symbolisée par la présence de bulles 16 d'air. D'autre part les trois réacteurs comprennent une biomasse sur lit mobile. Le réacteur 3 comprend une biomasse 13. Le réacteur 4 comprend une biomasse 14. Le réacteur 5 comprend une biomasse 15.

L'exemple qui suit illustre l'invention sans pour autant en limiter la portée.

### EXEMPLE

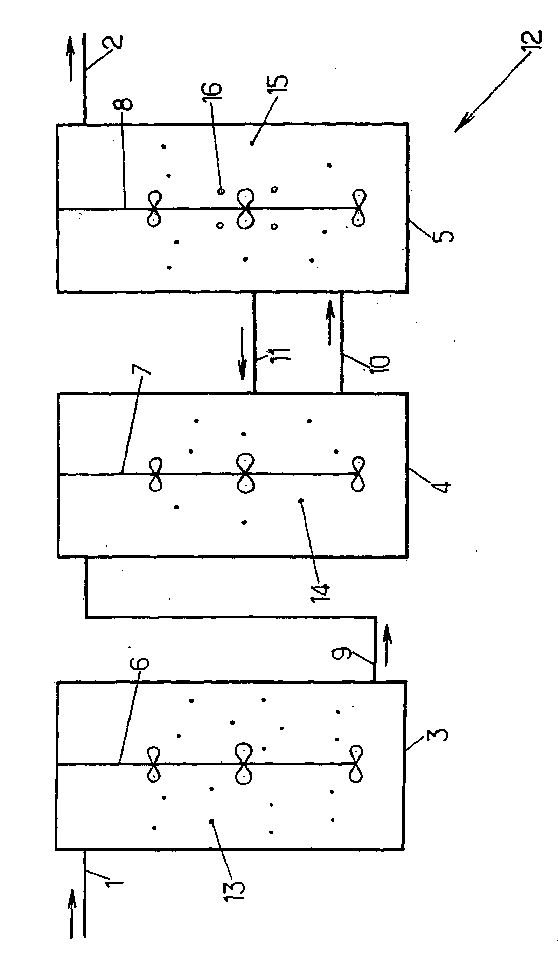

Dans l'exemple qui suit, on utilise un dispositif 12 tel que décrit à la figure 1. Les réacteurs sont remplis à 40% de matériau plastique BIOFLOW 9 sur lequel sont fixées des bactéries Désulfovibrio pour le réacteur 3, de 40% de matériau plastique BIOFLOW 9 sur lequel sont fixées des bactéries Thiotrix pour le réacteur 4, et de 40% de matériau plastique BIOFLOW 9 sur lequel sont fixées des bactéries Nitrosomonas et Nitrobacter pour le réacteur 5.

Les résultats sont donnés pour un temps de séjour de 12,5 heures.

Pour mesurer l'élimination de la pollution carbonée, on a mesuré la Demande Chimique en Oxygène (DCO) en sortie du deuxième réacteur 4. Pour l'ensemble des trois réacteurs, la Charge Volumique Appliquée (CVA) en DCO est de 0,31 kg/m³.j (Kilogramme par m3 et par jour), et la Charge Volumique Eliminée (CVE) en DCO est de 0,22 kg/m³.j. La Charge Volumique Appliquée (CVA) est la charge volumique entrante. La Charge Volumique Eliminée (CVE) est la charge volumique résultat de la soustraction entre la charge volumique entrante et la charge volumique sortante. Pour le premier réacteur 3, la CVA en DCO est de 0,84 kg/m³.j et la CVE en DCO est de 0,60 kg/m³.j, pour un temps de séjour de 4,6 heures. Les résultats sont les suivants, donnés dans le tableau 1.

**Tableau 1 Elimination de la DCO soluble**

| DCO en alimentation (conduit 1) (mg/l) | DCO en sortie du réacteur 4 (anoxie) (mg/l) | DCO en sortie du réacteur 5 (aérobie) (mg/l) | Rendement des réacteurs 3+4 en DCO (%) | Rendement global des réacteurs 3+4+5 en DCO (%) |
|---|---|---|---|---|
| 161 | 48 | 45 | 70 | 72 |

On constate donc une très bonne élimination de la pollution carbonée.

Pour mesurer l'efficacité de la nitrification, on a mesuré la quantité de N dans NH₄ (N.NH₄) dans les différents effluents. Pour le troisième réacteur 5, la CVA en N.NH₄ est de 0,18 kg/m³.j et la CVE en N.NH₄ est de 0,17 kg/m³.j, pour un temps de séjour de 4,3 heures. Les résultats sont les suivants, donnés dans le tableau 2.

**Tableau 2 Nitrification**

| N.NH₄ en alimentation (conduit 1) (mg/l) | N.NH₄ en sortie du réacteur 5 (aérobie) (mg/l) | N.NO₂ en sortie du réacteur 5 (aérobie) (mg/l) | N.NO₃ en sortie du réacteur 5 (aérobie) (mg/l) | Rendement du réacteur 5 en N.NH₄ transformé (%) |
|---|---|---|---|---|
| 32,2 | 1,2 | 3,1 | 13 | 96,3 |

On constate donc que le rendement de nitrification est très bon.

Pour mesurer l'efficacité de la dénitrification, on a mesuré la quantité de N dans NO₃ (N.NO₃) dans les différents effluents. Pour le deuxième réacteur 4, la CVA en N.NO₃ est de 0,21 kg/m³.j et la CVE en N.NO₃ est de 0,18 kg/m³.j, pour un temps de séjour de 4,3 heures. Les résultats sont les suivants, donnés dans le tableau 3.

**Tableau 3 Dénitrification**

| N.NH₄ en aliment ation (conduit 1) (mg/l) | N.NO₂ en sortie du réacteur 4 (anoxie) (mg/l) | N.NO₃ en sortie du réacteur 4 (anoxie) (mg/l) | N.NH₄ en sortie du réacteur 5 (aérobie) (mg/l) | N.NO₂ en sortie du réacteur 5 (aérobie) (mg/l) | N.NO₃ en sortie du réacteur 5 (aérobie) (mg/l) | Rendeme nt du réacteur 5 en N.NO₃ éliminé (%) |
|---|---|---|---|---|---|---|
| 32,2 | 1,2 | 1,1 | 1,2 | 3,1 | 13 | 48,1 |

On constate donc que, pour un taux de recyclage d'environ 100% qui est le taux appliqué ici (rapport entre l'effluent recyclé par le conduit 11 vers le réacteur 4 sur l'effluent entrant par le conduit 9 dans le réacteur 4), on approche les 50% de rendement global de dénitrification.

Dans l'effluent 2, il est constaté la présence de soufre (natif) en forte quantité.

D'autre part, pour évaluer le devenir des sulfates, on regarde la concentration de S dans SO₄ dans les différents effluents, ainsi qu'il est résumé ci-dessous dans le tableau 4. Pour le premier réacteur 3, la CVA en S.SO₄ est de 0,24 kg/m³.j (en S.SO₄) et la CVE en S.SO4 est de 0,16 kg/m³.j, pour un temps de séjour de 4,6 heures. Les résultats sont les suivants, donnés dans le tableau 4.

**Tableau 4 Sulfato-réduction et sulfo-oxydation**

| S.SO₄ en alimentation (CONDUIT 1) (mg/l) | S.SO₄ en sortie du réacteur- 3 (anaérobie) (mg/l) | S.SO₄ en sortie du réacteur 4 (anoxie) (mg/l) | S.SO₄ en sortie du réacteur 5 (aérobie) (mg/l) | Rendement du réacteur 3 en S.SO₄ transformé (%) |
|---|---|---|---|---|
| 46,7 | 15,9 | 42,8 | 45 ,9 | 65,9 |

On constate bien d'après ces résultats une réduction des sulfates en anaérobiose avec un rendement proche de 66%, une ré oxydation des sulfure formés en anaérobiose dans le réacteur 4 de dénitrification, et une finition de l'oxydation du soufre en sulfate dans le réacteur 5 aérobie, pour retrouver des valeurs très proches de celles de l'alimentation. D'autre part, on a constaté que la sulfato réduction est bien corrélée à l'élimination de la DCO.

## Revendications

1. Procédé de traitement biologique d'un effluent en vue de son épuration, qui comprend le traitement de la majeure partie dudit effluent dans une première étape de traitement biologique anaérobie, à biomasse fixée sur un support mobile, donnant un premier effluent, la biomasse présente dans la première étape comprenant au moins des bactéries sulfato-réductrices, puis le traitement de la majeure partie du premier effluent dans une deuxième étape de traitement biologique anoxique, à biomasse fixée, donnant un deuxième effluent, la biomasse présente dans la deuxième étape comprenant au moins des bactéries sulfo-oxydantes, et enfin le traitement de la majeure partie du deuxième effluent dans une troisième étape de traitement biologique aérobie, à biomasse fixée, donnant un troisième effluent épuré, la biomasse présente dans la troisième étape comprenant au moins des bactéries nitrifiantes, ledit procédé comprenant en outre un recyclage d'une partie de l'effluent présent dans la troisième étape vers la deuxième étape.

2. Procédé selon la revendication 1 tel que de la majeure partie de l'effluent à traiter dans ledit procédé est tamisé et/ou décanté dans une étape préalable audit procédé de traitement.

3. Procédé selon l'une des revendications 1 ou 2 dans lequel de la majeure partie du troisième effluent issu dudit procédé est décanté.

4. Procédé selon l'une des revendications 1 à 3 tel que la deuxième étape de traitement anoxique est un traitement à biomasse fixée sur un support mobile ou sur un support fixe.

5. Procédé selon l'une des revendications 1 à 4 tel que la troisième étape de traitement aérobie est un traitement à biomasse fixée sur un support mobile ou sur un support fixe.

6. Procédé selon, l'une des revendications 1 à 5 utilisant un dispositif (12) comprenant un premier réacteur de traitement (3), à biomasse fixée sur un support mobile, puis un deuxième réacteur de traitement anoxique (4), à biomasse fixée, et enfin un troisième réacteur de traitement aérobie (5), à biomasse fixée, ainsi que les moyens de transport d'effluent (1) vers le premier réacteur, du premier au deuxième réacteur (9), du deuxième au troisième réacteur (10), et les moyens de sortie d'effluent (2) du troisième réacteur, ledit dispositif comprenant en outre au moins un moyen de recyclage du troisième réacteur vers le deuxième réacteur (11).

7. Procédé selon la revendication 6 dans lequel le premier réacteur comprend au moins un moyen de mélange.

8. Procédé selon l'une des revendications 6 ou 7 dans lequel le deuxième réacteur comprend au moins un moyen de mélange.

9. Procédé selon l'une des revendications 6 à 8 dans lequel le troisième réacteur comprend au moins un moyen de mélange.

10. Procédé selon l'une des revendications 6 à 9 dans lequel le troisième réacteur comprend au moins un moyen d'aération.

## Claims

1. A process for the biological treatment of an effluent in order to purify it, comprising a first treatment of the majority of said effluent in a first step of anaerobic biological treatment by the way of a biomass is fixed onto a mobile support, giving a first effluent, the biomass present in the first step comprising at least sulfate-reducing bacteria, followed by a second treatment of the majority of the first effluent, in a second step of anoxic biological treatment, by the way of a fixed biomass, giving a second effluent, the biomass present in the second step comprising at least sulfur-oxidizing bacteria, and finally a third treatment of the majority of the second effluent in a third step of aerobic biological treatment, by the way of a fixed biomass, giving a third purified effluent, the biomass present in the third step comprising at least nitrifying bacteria, wherein the process also comprises recycling of some of the effluent present in the third step into the second step.

2. The process as claimed in claim 1, wherein the majority of the effluent to be treated in said process is screened, decanted, or screened and decanted, in a step prior to the first treatment process.

3. The process as claimed in claim 1, wherein the majority of the third effluent derived from said process is decanted.

4. The process as claimed in claim 1, wherein the second step of the anoxic treatment is a treatment by the way of a biomass fixed onto a mobile support or onto a fixed support.

5. The process as claimed in claim 1, such that the third step of the aerobic treatment is a treatment by the way of a biomass fixed onto a mobile support or onto a fixed support.

6. The process as claimed claim 1 comprising the use of a device comprising a first treatment reactor, comprising a biomass fixed onto a mobile support, followed by a second anoxic treatment reactor, comprising a fixed biomass, and finally a third aerobic treatment reactor, comprising a fixed biomass, and also a conduit for transporting effluent to the first reactor, a conduit for transporting the first effluent from the first to the second reactor, a conduit for transporting the second effluent from the second to the third reactor, and a conduit for removing effluent from the third reactor, said device also comprising at least one means for recycling from the third reactor to the second reactor.

7. The process as claimed claim 1 comprising the use of a device comprising a first treatment reactor, comprising a biomass fixed onto a mobile support, followed by a second anoxic treatment reactor, comprising a fixed biomass, and finally a third aerobic treatment reactor, comprising a fixed biomass, and also a conduit for transporting effluent to the first reactor, a conduit for transporting the first effluent from the first to the second reactor, a conduit for transporting the second effluent from the second to the third reactor, and a conduit for removing effluent from the third reactor, said device also comprising at least one means for recycling from the third reactor to the second reactor, wherein the first reactor comprises at least one mixing means.

8. The process as claimed claim 1 comprising the use of a device comprising a first treatment reactor, comprising a biomass fixed onto a mobile support, followed by a second anoxic treatment reactor, comprising a fixed biomass, and finally a third aerobic treatment reactor, comprising a fixed biomass, and also a conduit for transporting effluent to the first reactor, a conduit for transporting the first effluent from the first to the second reactor, a conduit for transporting the second effluent from the second to the third reactor, and a conduit for removing effluent from the third reactor, said device also comprising at least one means for recycling from the third reactor to the second reactor, wherein the second reactor comprises at least one mixing means.

9. The process as claimed claim 1 comprising the use of a device comprising a first treatment reactor, comprising a biomass fixed onto a mobile support, followed by a second anoxic treatment reactor, comprising a fixed biomass, and finally a third aerobic treatment reactor, comprising a fixed biomass, and also a conduit for transporting effluent to the first reactor, a conduit for transporting the first effluent from the first to the second reactor, a conduit for transporting the second effluent from the second to the third reactor, and a conduit for removing effluent from the third reactor, said device also comprising at least one means for recycling from the third reactor to the second reactor, wherein the third reactor comprises at least one mixing means.

10. The process as claimed claim 1 comprising the use of a device comprising a first treatment reactor, comprising a biomass fixed onto a mobile support, followed by a second anoxic treatment reactor, comprising a fixed biomass, and finally a third aerobic treatment reactor, comprising a fixed biomass, and also a conduit for transporting effluent to the first reactor, a conduit for transporting the first effluent from the first to the second reactor, a conduit for transporting the second effluent from the second to the third reactor, and a conduit for removing effluent from the third reactor, said device also comprising at least one means for recycling from the third reactor to the second reactor, wherein the third reactor comprises at least one aeration means.

## Patentansprüche

1. Verfahren zur biologischen Behandlung eines Abwassers, um es zu klären, umfassend die Behandlung des Großteils des Abwassers in einem ersten Schritt der anaeroben biologischen Behandlung mit auf einem mobilen Träger fixierter Biomasse, was ein erstes Abwasser ergibt, wobei die in dem ersten Schritt vorhandene Biomasse zumindest sulfatreduzierende Bakterien umfasst, dann die Behandlung des Großteils des ersten Abwassers in einem zweiten Schritt der anoxischen biologischen Behandlung, mit fixierter Biomasse, was ein zweites Abwasser ergibt, wobei die in dem zweiten Schritt vorhandene Biomasse zumindest sulfatoxidierende Bakterien umfasst, und schließlich die Behandlung des Großteils des zweiten Abwassers in einem dritten Schritt der aeroben biologischen Behandlung, mit fixierter Biomasse, was ein drittes geklärtes Abwasser ergibt, wobei die in dem dritten Schritt vorhandene Biomasse zumindest nitrifizierende Bakterien umfasst, wobei das Verfahren außerdem eine Rückschleusung eines Teils des in dem dritten Schritt vorhandenen Abwassers zu dem zweiten Schritt umfasst.

2. Verfahren gemäß Anspruch 1, wobei der Großteil des in dem Verfahren zu behandelnden Abwassers in einem Schritt vor dem Verfahren zur Behandlung gesiebt und/oder dekantiert wird.

3. Verfahren gemäß einem der Ansprüche 1 oder 2, wobei der Großteil des aus dem Verfahren stammenden dritten Abwassers dekantiert wird.

4. Verfahren gemäß einem der Ansprüche 1 bis 3, wobei der zweite Schritt der anoxischen Behandlung eine Behandlung mit auf einem mobilen Träger oder auf einem fixierten Träger fixierter Biomasse ist.

5. Verfahren gemäß einem der Ansprüche 1 bis 4, wobei der dritte Schritt der aeroben Behandlung eine Behandlung mit auf einem mobilen Träger oder auf einem fixierten Träger fixierter Biomasse ist.

6. Verfahren gemäß einem der Ansprüche 1 bis 5, unter Verwendung einer Vorrichtung (12), umfassend einen ersten Behandlungsreaktor (3) mit auf einem mobilen Träger fixierter Biomasse, dann einen zweiten Reaktor (4) für die anoxische Behandlung mit fixierter Biomasse und schließlich einen dritten Reaktor (5) für die aerobe Behandlung mit fixierter Biomasse, sowie Mittel für den Transport von Abwasser (1) zu dem ersten Reaktor, von dem ersten zu dem zweiten Reaktor (9), von dem zweiten zu dem dritten Reaktor (10) und Mittel für den Auslass von Abwasser (2) aus dem dritten Reaktor, wobei die Vorrichtung außerdem mindestens ein Mittel für die Rückschleusung von dem dritten Reaktor zu dem zweiten Reaktor (11) umfasst.

7. Verfahren gemäß Anspruch 6, wobei der erste Reaktor zumindest ein Mittel für das Mischen umfasst.

8. Verfahren gemäß einem der Ansprüche 6 oder 7, wobei der zweite Reaktor zumindest ein Mittel für das Mischen umfasst.

9. Verfahren gemäß einem der Ansprüche 6 bis 8, wobei der dritte Reaktor zumindest ein Mittel für das Mischen umfasst.

10. Verfahren gemäß einem der Ansprüche 6 bis 9, wobei der dritte Reaktor zumindest ein Mittel für die Entlüftung umfasst.
